# NEUE EUROPÄISCHE PATENTSCHRIFT

(11) **EP 0 242 733 B2**
(45) Veröffentlichungstag und Bekanntmachung des Hinweises auf die Entscheidung über den Einspruch: **20.01.1993**
(45) Hinweis auf die Patenterteilung: 01.02.1989
(21) Anmeldenummer: 87105307.0
(22) Anmeldetag: 25.07.1984
(51) Int. Cl.: B27B 5/20

(54) **Sägeeinrichtung**
Sawing device
Dispositif pour scier

(30) Priorität: 16.08.1983 DE 3329496
(43) Veröffentlichungstag der Anmeldung: 28.10.1987
(62) Teilanmeldung aus: 84108778.6
(73) Patentinhaber: Black & Decker Overseas AG, FL-9490 Vaduz (LI)
(72) Erfinder: Bergler, Otto, D-7130 Muehlacker-Lomersheim (DE)
(74) Vertreter: UEXKÜLL & STOLBERG

(56) Entgegenhaltungen:
- DE-A- 2 929 932
- DE-B-31 096 05
- DE-C-33 479 20
- US-A- 4 152 961
- "Sicherheitsregeln für Pendelkreissägemaschinen und Parallelschwingkreissägemaschinen", Hauptverband der gewerblichen Berufsgenossenschaften, Fachausschuss Holz, Carl Heymanns Verlag KG, D-5000 Köln 1, Bestell Nr. ZH 1/3.4, Ausgabe 4. 1980.
- "Sicherheitsregeln für Gehrungskappsägemaschinen", Hauptverband der gewerblichen Berufsgenossenschaften, Fachausschuss Holz, Carl Heymanns Verlag KG, D-5000 Köln 1, Bestell Nr. ZH 1/3.6, Ausgabe 4, 1980

## Beschreibung

Die Erfindung betrifft eine Sägeeinrichtung nach dem Oberbegriff des Patentanspruches 1. Sägeeinrichtungen dieser Artsind bekannt (US-A-41 52 961 ). Bei solchen Sägeeinrichtungen, die als sogenannte Zugsägen ausgebildet sind, wird das Sägeaggregat an oberhalb des Sägeblattes parallel nebeneinander liegenden Stangen geführt, die in einer Halterung angeordnet sind, die ihrerseits um eine parallel zur Sägeblattebene verlaufende Achse an einem schwenkbaren Rundtisch kippbar gelagert ist. Eine ähnliche Bauart (DE-A-29 29 932) sieht eine aus einem Flachprofil gebildete Führungsstange vor, die längs verschiebbar in einem buchsenförmigen Teil gelagert ist, das auf einem drehbaren Rundtisch sitzt. Durch Verschieben der Führungsstange in dem buchsenförmigen Teil läßt sich auch bei dieser Bauart das Sägeaggregat zur Erzielung längerer Schnitte verschieben. Nachteilig ist bei beiden Bauarten, daß der Rundtisch jeweils einen Durchmesser aufweisen muß, der dem Schnittbereich entspricht, wenn das zu bearbeitende Werkstück jeweils ordnungsgemäß auf einer Auflage gehalten werden soll. Dies führt dazu, daß entweder der Schnittbereich beschränkt oder daß die Abmessungen der neuen Säge so groß werden, daß deren Handlichkeit wegen des Platzbedarfes und auch wegen des Gewichtes nicht mehr gegeben ist.

Der Erfindung liegt die Aufgabe zugrunde, diesen Nachteil zu vermeiden und eine handliche Sägeeinrichtung der eingangs genannten Art zu schaffen, bei der trotz großen Schnittbereiches und ordnungsgemäßer Auflage des Werkstückes nur ein kleiner Rundtisch vorzusehen ist.

Zur Lösung dieser Aufgabe werden die kennzeichnenden Merkmale des Patentanspruchs 1 vorgesehen.

Die Ausbildung zur Durchführung von Kappschnitten gestattet es, den Einschnitt in das Werkstück von oben durchzuführen und dann einen gegebenenfalls noch erforderlichen Zugschnitt vorzunehmen, so daß das Sägeblatt in der Ausgangsstellung nicht hinter dem Werkstück positioniert zu sein braucht, wie dies an sich bei Zugsägen der Fall ist. Dadurch wird der Aufbau kompakter und handlicher. Darüber hinaus bringt die Anordnung des sich über die Ausnehmung in der Werkstückauflage hinaus erstreckenden Auslegerarms mit der Verlängerung des im Rundtisch vorgesehenen Schlitzes den Vorteil mit sich, daß das Werkstück auf der gesamten Länge des Eintauschschlitzes aufliegend gehalten werden kann, daß aber der eigentliche, die Schwenkführung erlaubende Rundtisch sehr klein gehalten werden kann. Dadurch kann man, obwohl ein großer Schnittbereich zu erfassen ist, auch die Lagerung für den Rundtisch und damit die gesamte Sägeeinrichtung relativ klein bauen, so daß eine sehr handliche und insbesondere auch für transportable Zwecke einsetzbare Zug-Säge-Einrichtung mit Kappschnittfunktion geschaffen werden kann.

Es folgt die Beschreibung eines Ausführungsbeispieles der Erfindung. Es zeigen
Fig. 1 eine perspektivische Ansicht einer erfindungsgemäß ausgebildeten Gehrungs- und Zugsäge,
Fig. 2 die Draufsicht auf den Werkstückauflagetisch der Fig. 1 ohne Rundtisch und Sägeaggregat und
Fig. 3 den Schnitt durch den Werkstückauflagetisch der Fig. 2 längs der Linie III-III.

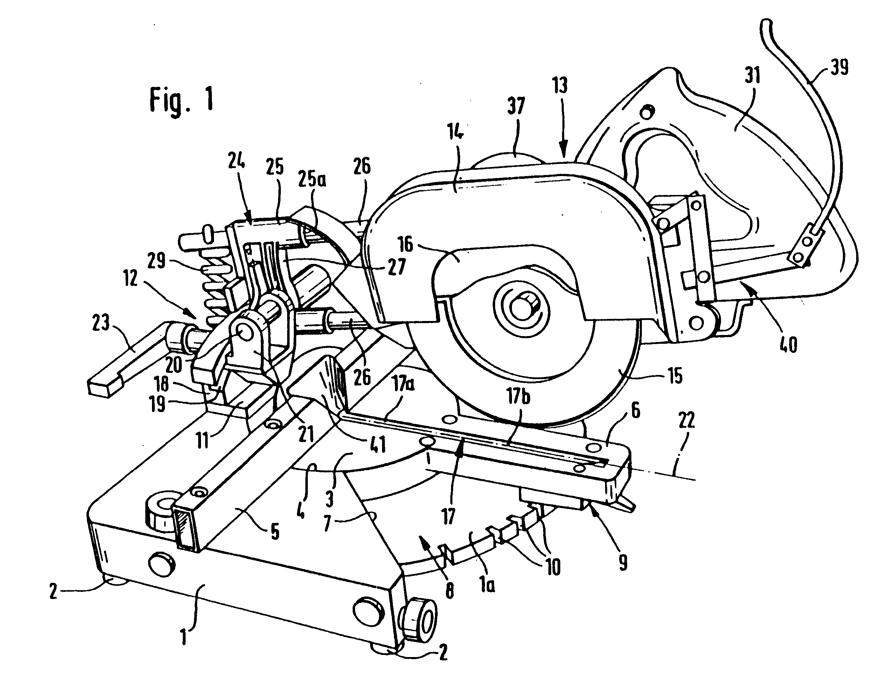

In der Fig. 1 ist in einem Werkstückauflagetisch 1, der mit einstellbaren Standfüßen 2 versehen ist, ein Rundtisch 3 verschwenkbar gelagert, der in dem Werkstückauflagetisch 1 in einer seinen Außenabmessungen entsprechenden Aussparung 4 zwischen einem Boden 1a des Werkstückauflagetisches und einer quer über den Rundtisch verlaufenden Anschlagleiste 5 gehalten ist. Der Rundtisch 3 ist einstückig mit einem Auslegerarm 6 versehen, der sich bei der Verschwenkung des Rundtisches 3 in einer von schräg verlaufenden Seitenwänden 7 begrenzten Ausnehmung 8 bewegt. Die Lage des Auslegerarmes 6 kann durch eine Rasteinrichtung 9 in entsprechenden Einkerbungen 10 festgestellt werden, so daß damit auch die Lage des Rundtisches 3 fixierbar ist.

Fest mit dem Rundtisch 3 verbunden ist eine Lagerplatte 11 auf der eine Schwenklagerung 12 für ein Sägeaggregat 13 befestigt ist, das in noch näher zu beschreibender Weise zur Ausführung von Kapp-, Gehrungs- und Zugschnitten geeignet ist. Zu diesem Zweck taucht das in der Fig. 1 hinter einer oberen Schutzhaube 14 und einer unteren, wegschwenkbaren Schutzhaube 15 gelagerte Sägeblatt 16 in einen Eintauchschlitz 17 ein, der aus zwei miteinander fluchtenden Teilen besteht, von denen der eine, 17a, etwa vom Zentrum des Rundtisches 3 ausgehend bis zu dessen Peripherie verläuft und der andere, 17b, in dem Auslegerarm 6 verläuft.

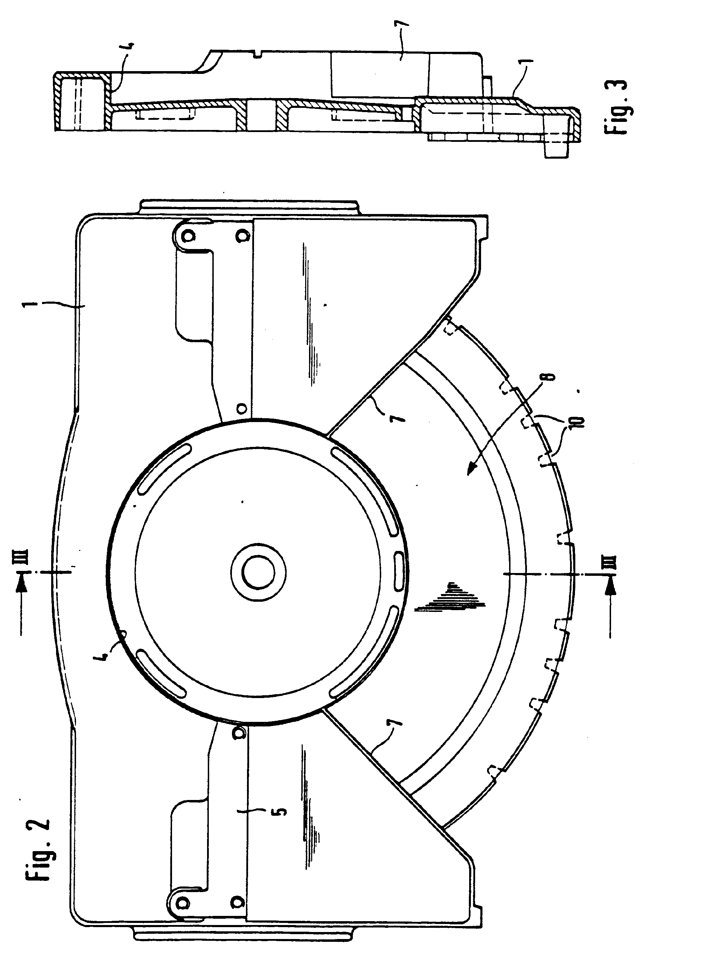

Wie aus den Fig. 1 und 2 hervorgeht, besteht die Schwenklagerung 12 aus einem fest mit der Befestigungsplatte 11 verbundenen Lagerklotz 18 mit einer kreisbogenförmigen Kulissenführung 19, welcher ein mit einer Schwenkachse 20 versehener Lagerbock 21 um eine Achse 22 verschwenkt werden kann, die parallel zum Sägeblatt 16 in Richtung des Eintauchschlitzes 17 auf der Oberfläche des Rundtisches 3 verläuft. Die jeweilige Lage des Lagerbockes 21 ist beispielsweise über eine Skala einstellbar. Sie wird durch das Anziehen eines Klemmhebels 23 fixiert, der den Lagerbock 21 gegen den Lagerklotz 18 drückt. An der Schwenkachse 20 verschwenkbar gelagert ist ein Lagerjoch 24, das aus zwei hülsenförmigen und parallel zueinander ausgerichteten Lagerkörpern 25 für je eine Rundstange 26 besteht, die untereinander durch Querverstrebungen 27 und 28 verbunden sind. Die obere der beiden Rundstangen 26 ist durch den Lagerkörper 25 nach hinten durchgeführt. An ihr ist eine Zugfeder 29 eingehängt, deren anderes Ende fest mit dem Lagerklotz 18 über einen Haltebolzen 30 verbunden ist. Diese Feder 29 sorgt dafür, daß die Rundstangen 26 und das Joch 24 stets in die in der Fig. 1 angedeutete Lage gebracht werden, in der die Führungsstangen 26 ihre obere Endlage einnehmen. Das frei auf ihnen verschiebbare Sägeaggregat 13 wird dann durch die Schwerkraft in der gegenüber der Fig. 1 linken Endlage gehalten, in der das noch zu beschreibende Sägegehäuse an den Stirnseiten 25a der hülsenförmigen Lagerkörper 25 anliegt. In der in der Fig. 1 gezeigten Lage ist das Sägeaggregat 13 in der rechten Endlage gezeigt, in der es nur durch Handbetätigung gehalten werden kann, die über den Handgriff erfolgt.

Bei der Benutzung des neuen Kapp-, Gehrungsund Zugsägenaggregates wird zunächst an der Anschlagleiste 5 das zu bearbeitende Werkstück angelegt. Anschließend wird die Schwenklagerung 12 entweder so eingestellt, daß das Sägeblatt 16 senkrecht zur Oberfläche des Werkstückauflagetisches 1 oder in einem Winkel hierzu steht. Es kann dann der Gehrungswinkel durch Einstellen der Lage des Rundtisches 3 eingestellt werden und anschließend kann die Bearbeitung durch Herunterdrücken des Sägeaggregates 13 mit den Rundstangen 26 am Handgriff 31 begonnen werden. Dabei wird beim Ergreifen des Handgriffes 31 von der Bedienungsperson zwangsläufig der vor dem Handgriff 31 stehenden Handhebel 39 erfaßt und gegen den Handhebel 31 gedrückt, so daß über die Hebelanordnung 40 die untere Schutzhaube 15 vom Sägeblatt abgeschwenkt wird. Die obere Schutzhaube 14 ist fest mit dem Sägegehäuse verbunden. Sie kann auch Teil diees Gehäuses sein. Nach dem Eintauchen des Sägeblattes 16 kann bei Bedarf das gesamte Sägeaggregat 13 mit Hilfe des Handgriffes längs der Rundstangen 26 in Richtung der Achse 22 verchoben werden, so daß ein Zugschnitt möglich ist. Nach der Bearbeitung wird der Handgriff 31 losgelassen. Die Schutzhaube 15 schwenkt sich wieder vor das Sägeblatt 16 und die Feder29 hebt die aus den Rundstangen 26 bestehende Führung für das Sägeaggregat 13 nach oben, in die in der Fig. 1 gezeigten Lage. Durch das Eigengewicht rutscht dann das Sägeaggregat 13 in die linke Lage bis zum Anschlag an den Stirnflächen 25a der hülsenförmigen Lagerkörper 25. Ein neuer Bearbeitungsvorgang kann einsetzen. Um jeweils zu gewährleisten, daß das Sägeblatt in das Werkstück eintauchen kann, ist die Anschlagleiste 5 in ihrer Mitte durch eine Ausnehmung 41 unterbrochen die sich entsprechend aus dem Schwenkbereich des Rundtisches 3 und entsprechend der möglichen Schwenkung des Sägeaggregates um die Achse 22 jeweils von derAnschlagkante der Anschlagleiste 5 aus gesehen nach hinten und oben erweitert.

## Patentansprüche

1. Gehrungs- und Zugsägeeinrichtung, bestehend aus einem Sägeaggregat mit einem Sägegehäuse und einem motorgetriebenen Sägeblatt (16), das zwischen einer radial inneren und einer radial äußeren Endlage bewegbar an einer parallel zur Ebene des Sägeblattes verlaufenden Längsführung gehalten ist, die im Bereich des Randes eines verdrehbaren Rundtisches (3) mit einem bis zum Umfang durchgehenden Eintauschschlitz (17) für das Sägeblatt angeordnet ist, wobei der Rundtisch in einer Werkstückauflage (1) eingelassen ist, die auf der Seite des Rundtisches, auf der dessen Eintauchschlitz bis zur Peripherie reicht, eine dem Gehrungsschnittbereich entsprechende Ausnehmung (8) für das Sägeblatt aufweist, dadurch gekennzeichnet, daß die Sägeeinrichtung in der radial inneren Endlage des Sägeaggregates zur Ausführung von Kappschnitten geeignet ist und daß der Rundtisch (3) mit einem Auslegerarm (6) versehen ist, der sich zumindest in seiner Stellung in der Mitte der Ausnehmung (8) innerhalb der Ausnehmung (8) und radial über diese hinaus erstreckt und der einen mit dem Eintauchschlitz (17a) des Rundtisches (3) fluchtenden Eintauchschlitz (17b) aufweist.

2. Sägeeinrichtung nach Anspruch (1), dadurch gekennzeichnet, daß der Werkstückauflagetisch (1) mit einer Ausnehmung (8) mit schräg verlaufenden Seitenwänden (7) versehen ist, und daß die Seitenwände als Begrenzungswände für den Auslegerarm (6) dienen.

3. Sägeeinrichtung nach Anspruch 1, dadurch gekennzeichnet, daß die Lage des Auslegerarmes (6) durch eine Rasteinrichtung fixierbar ist, die mit Einkerbungen (10) in der Werkstückauflage (1) zusammenwirkt.

## Claims

1. Mitre and crosscut saw device, consisting of a saw unit having a saw housing and a motor-driven sawblade (16) which is held between a radially inner and a radially outer end position movably on a longitudinal guide which extends parallel to the plane of the sawblade and which is arranged, in the region of the edge of a rotatable round table (3), with a plunge slot (17) continous as far as the circumference and intended for the sawblade, the round table being set in a workpiece rest (1) which, on the side of the round table on which its plunge slot extends as far as the periphery, has a recess (8) for the sawblade which corresponds to the mitre-cut region, characterized in that, in the radially inner end position of the saw unit, the saw device is suitable for executing chop saw cuts, and in that the round table (3) is equipped with an extension arm (6) which, at least in its position in the middle of the recess (8), extends within the recess (8) and radially beyond this and which has a plunge slot (17b) aligned with the plunge slot (17a) of the round table (3).

2. Sawing arrangement according to Claim 1, characterised in that the workpiece rest (1) is provided with a recess (8) having obliquely extending side walls (7) and in that the side walls serve as boundary walls for the extension arm (6).

3. Sawing arrangement according to Claim 1, characterised in that the position of the extension arm (6) can be established by a click-stop engaging means which co-operates with notches (10) in the workpiece rest (1).

## Revendications

1. Dispositif à onglet et égoîne composé d'un ensemble de sciage avec un carter de scie et une lame de scie (16) entraînée par moteur, qui est maintenue avec possibilité de déplacement entre une position finale radialement intérieure et une position finale radialement extérieure sur un guidage longitudinal se développant parallèlement au plan de la lame de scie, qui est disposé dans la zone du bord d'une table ronde pivotante (3) avec une fente d'introduction (17) ininterrompue jusqu'à la périphérie pour la lame de scie, la table ronde étant admise dans un porte-pièce (1) qui, du côté de la table ronde où sa fe.nte d'introduction arrive jusqu'à la périphérie, comporte pour la lame de scie une cavité (8) correspondant à la zone de coupe de l'onglet, caractérisé en ce que le dispositif de sciage dans la position radialement intérieure de l'ensemble de sciage est adapté à l'exécution d'entailles et que la table ronde (3) est pourvue d'un bras de positionnement (6), qui, au moins dans sa position au milieu de la cavité (8) à l'intérieur de la cavité (8), s'étend radialement au-dessus de celle-ci et comporte une fente d'introduction (17b) alignée avec la fente d'introduction (17a) de la table ronde (3).

2. Dispositif pour scier selon la revendication 1, caractérisé en ce que la table porte-pièce (1) est pourvue d'une cavité (8) avec des parois latérales s'étendant en biais, et en ce que les parois latérales servent de parois de limitation pour le bras de positionnement (6)

3. Dispositif pour scier selon la revendication 1, caractérisé en ce que la position du bras de positionnement (6) est susceptible d'être fixée par un dispositif à cliquet qui collabore avec des entailles (10) situées dans le porte-pièce (1).
